# EUROPÄISCHE PATENTANMELDUNG

(11) **EP 0 863 067 A1**
(43) Veröffentlichungstag der Anmeldung: **09.09.1998**
(21) Anmeldenummer: 97103504.3
(22) Anmeldetag: 04.03.1997
(51) Int. Cl.: B62K 13/04, B62K 3/16

(54) **Mehrzweckfahrzeug**

(71) Anmelder: Ibip e.V., Institut für berufliche Integration und Pflegepädagogik, 18107 Rostock (DE)
(72) Erfinder: Schulze, Erhard, 18109 Rostock (DE)
(74) Vertreter: Wendtland, Peter

(57) **Zusammenfassung**

Die Erfindung betrifft ein dreirädriges Mehrzweckfahrzeug zur wahlweisen Beförderung von insbesondere gehbehinderten Personen oder von Lasten, welches aus einem zweirädrigen Vorderteil und aus einem einrädrigen, mit einem Fahrradantriebsmechanismus versehenen Hinterteil sowie einem Verbindungsmechanismus zwischen Vorder- und Hinterteil besteht.

Erfindungsgemäß wird die Aufgabe dadurch gelöst, daß ein handelsübliches Fahrrad über einen Anschlußmechanismus entweder für den Transport von insbesondere gehbehinderten Personen mit einem selbständig fahrstabilen Rollstuhl oder für den Transport von Lasten mit einem selbständig handhabbaren, zweirädrigen bzw. einachsigen Lastenträger verbunden wird und, daß dazu aus der Vorderradgabel des Fahrrads das Vorderrad entfernt und in einer seitlich neben dem Hinterrad und dem Gepäckträger am Rahmen angeordneten Halterung gelagert wird und, daß der Anschlußmechanismus aus zwei nahezu senkrecht übereinander angeordneten lösbaren Verbindungselementen besteht und, daß in dem unteren Verbindungselement, der unteren Kupplung, das Fahrrad mit den Ausfallenden der Vorderradgabel an einem kardanisch gelagerten Tragbolzen abgestützt ist und, daß das obere Verbindungselement, die obere Kupplung, mit einem Gelenk für um eine nahazu senkrechte Achse ausführbare Schwenkbewegungen ausgerüstet ist.

## Beschreibung

Die Erfindung betrifft ein dreirädriges Mehrzweckfahrzeug zur wahlweisen Beförderung von insbesondere gehbehinderten Personen oder von Lasten, welches aus einem zweirädrigen Vorderteil und aus einem einrädrigen, mit einem Fahrradantriebsmechanismus versehenen Hinterteil sowie einem Verbindungsmechanismus zwischen Vorder- und Hinterteil besteht.

Behindertenfahrzeuge, bei denen ein Rollstuhl mit einem Fahrradantriebsteil zusammengekuppelt sind und von diesem angetrieben werden, sind seit längerem bekannt. So ist mit der DE-OS 36 25 955 ein Behindertenfahrzeug veröffentlicht worden, das aus einem Rollstuhl mit Sitz und Lehne, an dessen Rahmen zwei gleichachsige Hinterräder und wenigstens ein Vorderrad gelagert sind, einen hinter dem Rollstuhl angeordneten Fahrradrahmen mit einem über Pedale antreibbaren Antriebsrad, einem Sattel und einer an einem Lenkerlager des Fahrradrahmens um eine im wesentlichen vertikale Schwenkachse schwenkbar gelagerten Kupplungsvorrichtung für die lösbare Verbindung des Rollstuhls mit dem Fahrradrahmen besteht, wobei die Kupplungsvorrichtung wenigstens einen zur Längsachse des Fahrradrahmens quer verlaufenden Querträger hat, der in der Querrichtung im Abstand voneinander über zwei Kupplungselemente an dem Rollstuhlrahmen befestigbar ist und das Vorderende des Fahrradrahmens an dem Rahmen des Rollstuhls abstützt. In der dazugehörigen Zusatzanmeldung DE-OS 36 30 687 werden weitere Ausgestaltungen für die Kupplungseinrichtung zwischen Rollstuhl und Fahrradrahmen angeführt. Die Erfindung dieser Veröffentlichung geht von der Verwendung eines handelsüblichen Rollstuhls aus und will über eine zweckmäßige Kupplungsvorrichtung eine lösbare Verbindung mit dem Fahrradrahmen herstellen, so daß durch eine einfache Montage bzw. Demontage wahlweise eine gemeinsame Benutzung des aus Rollstuhl und Fahrradhinterteil bestehenden Gefährts oder die alleinige Benutzung des selbständig fahrstabilen Rollstuhls möglich ist.
Weiterhin ist mit der DE-OS 37 14 106 ein Kupplungsanschluß für Kombinationsfahrzeuge Rollstuhl und Fahrrad bekannt geworden, bei dem ein Querträger, an den ein Lenkkopf zum Anschluß des Fahrradrahmens mittig gelagert ist, mit seinen Enden in unmittelbarer Nähe der Haupträderachsen des Rollstuhls lösbar befestigt wird.
Aber auch bei diesem Vorschlag bestand die Aufgabe darin, den technischen Aufwand im Anschluß- und Gelenkmechanismus von Rollstuhl-Fahrrädern zu reduzieren und insbesondere sollte durch diese Lösung die Baugröße im Anschluß- und Gelenkbereich soweit verringert werden, daß es möglich wird, die Zahl der beim PKW-Transport zu transportierenden Elemente auf zwei zu beschränken. Zur Benutzung ist deshalb entweder das Kombinationsfahrzeug in seiner zusammenmontierten Form oder nach der Demontage allein nur der Rollstuhl vorgesehen. Das den Rollstuhl schiebende Fahrradteil ist im demontierten Zustand nicht gebrauchsfähig.
Mit der in der DE-OS 37 24 242 angeführten Lösung eines Fahrzeuges zur Beförderung behinderter Personen ist der Stand der Technik um eine weitere Kupplungsmöglichkeit zwischen Rollstuhl und Fahrradhinteraufbau bereichert worden und er ist im wesentlichen dadurch gekennzeichnet, daß die Verbindung des Rollstuhls mit dem Antriebsteil neben der vertikalen Lenkachse eine horizontale Schwenkachse aufweist und daß der Rollstuhl mit dem Antriebsteil in einer Schwenkstellung um diese horizontale Achse verriegelbar ist, in der der Rollstuhl sich nur auf Rädern der Hauptachse des Rollstuhls abstützt und die Stützlaufräder vom Boden abgehoben sind.
Nachteilig ist, wie bei den bereits vorstehend beschriebenen, daß auch diese Lösung keinen Verwendungszweck des Antriebsteils aufweist, wenn der Rollstuhl vom Behinderten in seinem ursprüglichen Verwendungszweck benutzt wird. Das Antriebsteil kann von der Begleitperson nicht mehr benutzt werden.
Auch bei dem Lastenttransportfahrzeug nach der europäischen Patentanmeldung, Veröffentlichungs-Nr. 0585736, wird wohl eine separate und getrennte Benutzung des vorderen Lastenträgerteils nach seiner Abkopplung vom Hauptrahmen aufgezeigt, jedoch muß auch bei dieser Lösung das hintere Antriebsteil als für sich allein nicht benutzbar für die Zeit der separaten Benutzung des Vorderteils zwischengeparkt werden.

Folglich ist es zur Vermeidung der Nachteile vorbekannter Kombinationsfahrzeuge das Ziel der Erfindung, ein nach dem Baukastensystem aufgebautes Mehrzweckrad zu entwickeln, mit dem sowohl eine kompakte Benutzung durch die zu transportierenden Personen im Rollstuhlteil und auf dem Fahrradteil bzw. im Falle von zu transportierenden Lasten durch das Frachtgut und die Transportperson auf dem vorderen Lastenträgerteil und dem hinteren Fahrradteil als auch eine getrennte Benutzung der Komponenten des Mehrzweckrades, nämlich des Rollstuhls bzw. des Lastenträgers und des Fahrradteils erreicht werden kann.

Die Erfindung stellt sich daher die Aufgabe, ein aus einem selbständig fahrstabilen Rollstuhl bzw. einem selbständig handhabbaren, zweirädrigen einachsigen Lastenträger und einem handelsüblichen Fahrrad zeitweilig zusammenfügbares und als Dreiradgefährt nutzbares Behindertenfahrzeug bzw. Lastentransportfahrzeug zu schaffen, welches aber auch die Nutzung seiner Bestandteile in seinen Ausgangsformen, nämlich den Rollstuhl durch den Behinderten, das Fahrrad durch die Begleitperson bzw. Transportperson und den Lastenträger zum Aufbewahren und Verschieben von Lasten, zeitweilig nach Wunsch zuläßt.

Enfindungsgemäß wird die Aufgabe dadurch gelöst, daß zur Nutzung des Mehrzweckfahrzeugs als einheitliches Gefährt ein handelsübliches Fahrrad über einen Anschlußmechanismus entweder für den Transport von insbesondere gehbehinderten Personen mit einem selbständig fahrstabilen Rollstuhl oder für den Transport von Lasten mit einem selbständig handhabbaren, zweirädrigen einachsigen Lastenträger verbunden wird und dazu aus der Vorderradgabel des Fahrrads das Vorderrad entfernt und in einer seitlich neben dem Hinterrad und dem Gepäckträger am Rahmen angeordneten Halterung gelagert wird. Der Anschlußmechanismus besteht dabei erfindungsgemäß aus zwei senkrecht übereinander angeordnete Verbindungselemente, einer unteren Kupplung und einer oberen Kupplung. Zur unteren Kupplungsverbindung werden die beiden Ausfallenden der Vorderradgabel des von seinem Vorderrad befreiten Fahrrads an einem mittig an einer zwischen den beiden Hauptradachsen des Rollstuhls bzw. zwischen den beiden Radachsen des Lastenträgers angeordneten Strebe an einem kardanisch gelagerten Tragbolzen lösbar befestigt und zur oberen Kupplungsverbindung am Steuerrohr des Fahrradrahmens ein Kupplungsteil lösbar befestigt, dessen dem Rollstuhl bzw. dem Lastenträger zugewandtes Ende um eine nahezu senkrechte Achse schwenkbar mit einer von Seite zu Seite reichenden Strebe bzw. mit einer die Seitenteile des Lastenträgers verbindenden Strebe verbunden wird.

Mit der Bereitstellung von vielfach nutzbaren Mehrzweckrädern als ergänzende pflegerische Hilfe für Behinderte besteht die Möglichkeit zur Verhinderung der Isolation der Behinderten durch Aufrechterhaltung und Ausbau von sozialen Kontakten innerhalb des Familienverbandes wie auch in den Behindertenanstalten sowie Jugendherbergen oder integrativen Einrichtungen als Stätten der Begegnung. Weiterhin besteht die Möglichkeit, Fahrdienste aller Art mittels des Mehrzweckrades einzurichten.
Das moderne und zeitgemäße Mehrzweckrad soll insbesondere Gehbehinderten und sonstigen Bedürftigen derart Unterstützung geben, daß über Mobilität und gemeinsame Erlebnisse für Behinderte und Nichtbehinderte neue Lebensräume eröffnet werden können.

Weiterhin bestehen mit der Bereitstellung von vielfach nutzbaren Mehrzweckrädern als Lastenträger und Transportfahrzeug auf Grund der offensichtlich hohen Flexibilität des Mehrzweckrades Einsatzmöglichkeiten im Handwerk und bei Gewerbetreibenden. Das umweltfreundliche Mehrzweckrad soll u.a. als Einkaufs-, Kurierfahrzeug, als Verkaufsstand, als Bürobotenmobil, als Werkstattmobil, also auch als variabel einsetzbares Transportmittel im Wirtschaftsverkehr den Nutzern zur Verfügung stehen.

Durch die schnelle Entkopplung des Mehrzweckrades in seine unabhängig voneinander nutzbaren Komponenten - Rollstuhl bzw. Lastenträger und Fahrrad - mittels des erfindungsgemäßen Kupplungssystems ist nicht nur ein besserer Transport mit dem PKW oder anderen Verkehrsmitteln möglich, es bleibt auch die individuelle Fortbewegungsmöglichkeit für jeden Nutzer erhalten.

Die Erfindung wird nachstehend an einem Ausführungsbeispiel näher erläutert. In der zugehörigen Zeichnung zeigen:
- Fig. 1:: Die Seitenansicht eines aus Rollstuhl und Fahrrad bestehenden Mehrzweckfahrzeugs;
- Fig. 1a :: Die Seitenansicht eines aus Lastenträger und Fahrrad bestehenden Mehrzweckfahrzeugs;
- Fig. 2:: Die Seitenansicht eines Anschlußmechanismus mit unterer und oberer Kupplung;

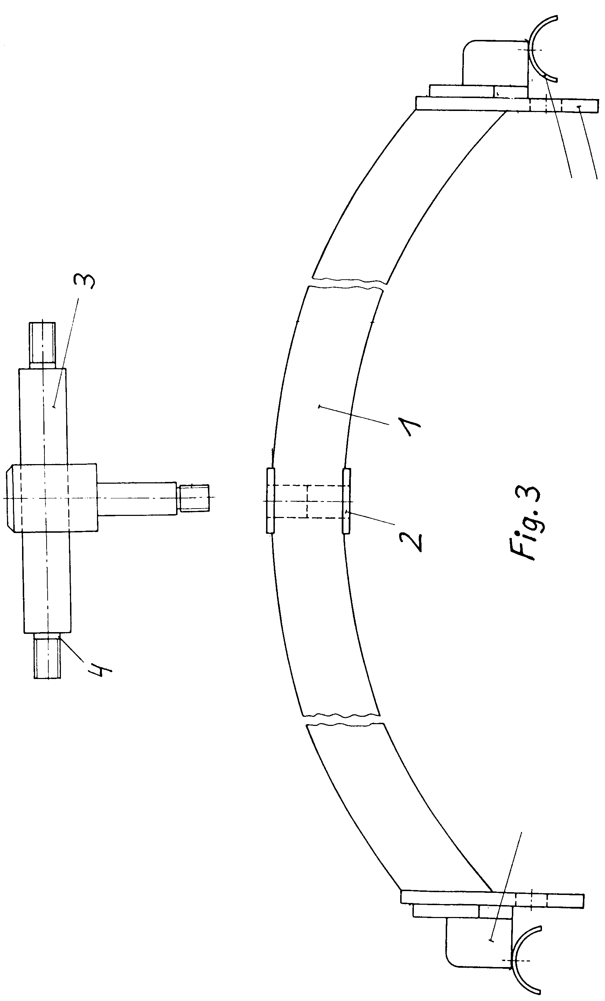

- Fig. 3:: Die Draufsicht der unteren Kupplung mit aus seiner Lagerung herausgezogenem T-Stück;
- Fig. 4:: Die Seitenansicht einer weiteren oberen Kupplung im gelösten Zustand;
- Fig. 4a :: Die Draufsicht auf die dazugehörige Strebe;

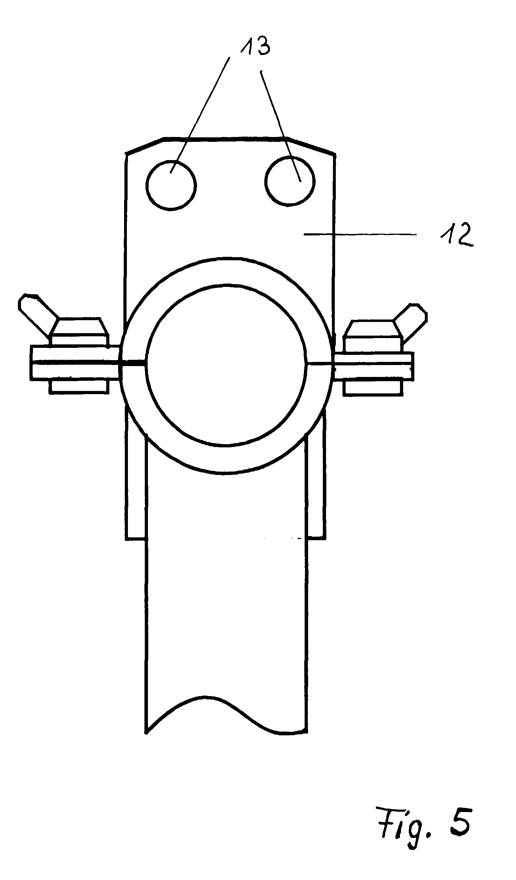

- Fig. 5:: Die Draufsicht eines Kupplungsvorderteils, das mittels Schnellspannschrauben am Steuerrohr des Fahrrads befestigt ist.

An einem selbständig fahrstabilen Rollstuhl wird in Höhe der und zwischen die Achslagerung der Haupträder eine untere Strebe 1 an den Rahmenrohren des Rollstuhls lösbar befestigt, die für den Fall des Zusammenklappens des Rollstuhls, z.B.beim PKW-Transport des Rollstuhls oder des Mehrzweckfahrzeugs, demontiert werden kann. An dieser Strebe 1 ist mittig eine Lagerhalterung 2 angeschweißt, in der ein T-Stück 3 um eine in Längsrichtung des Mehrzweckfahrzeugs gerichtete waagerechte Achse schwenkbar gelagert ist. An die schwenkbaren Enden 4 des T-Stücks 3 werden die beiden Gabelausfallenden 5a/5b der Vorderradgabel mittels Flügelschrauben oder Schnellspannern oder verstellbaren Klemmhebeln oder Achsmuttern lösbar befestigt.
Die untere Kupplung des Fahrrads mit dem Rollstuhl entspricht somit einer kardanischen Aufhängung der beiden Gabelausfallenden der Vorderradgabel. Durch diese untere Kupplung werden die beabsichtigten Lenkausschläge beim Fahren mit dem Mehrzweckfahrzeug vom Fahrradlenker auf den Rollstuhl übertragen.

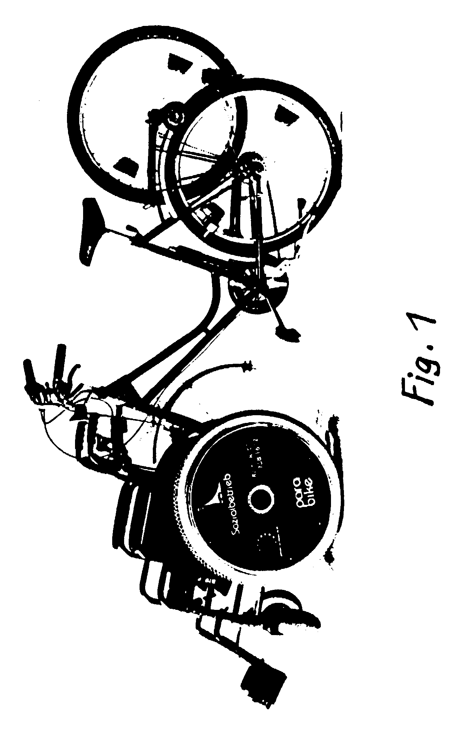

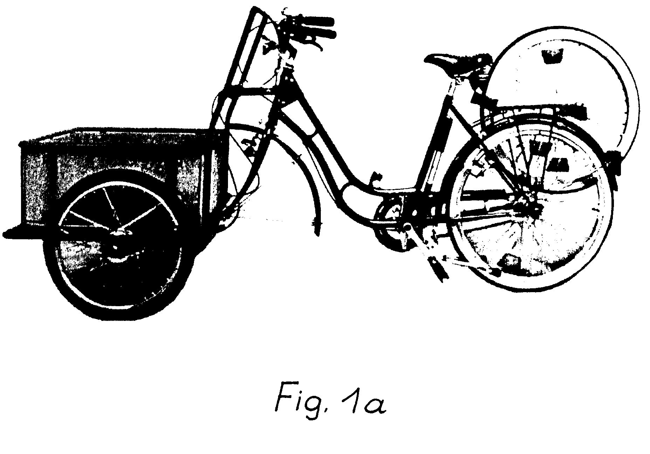

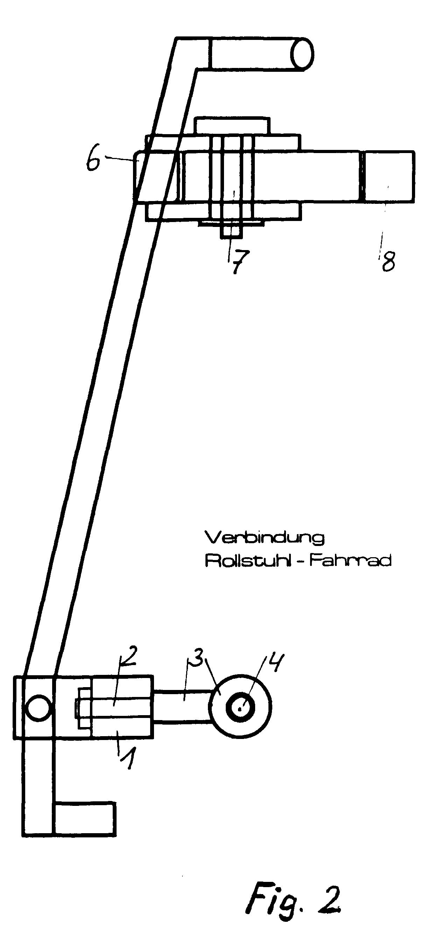

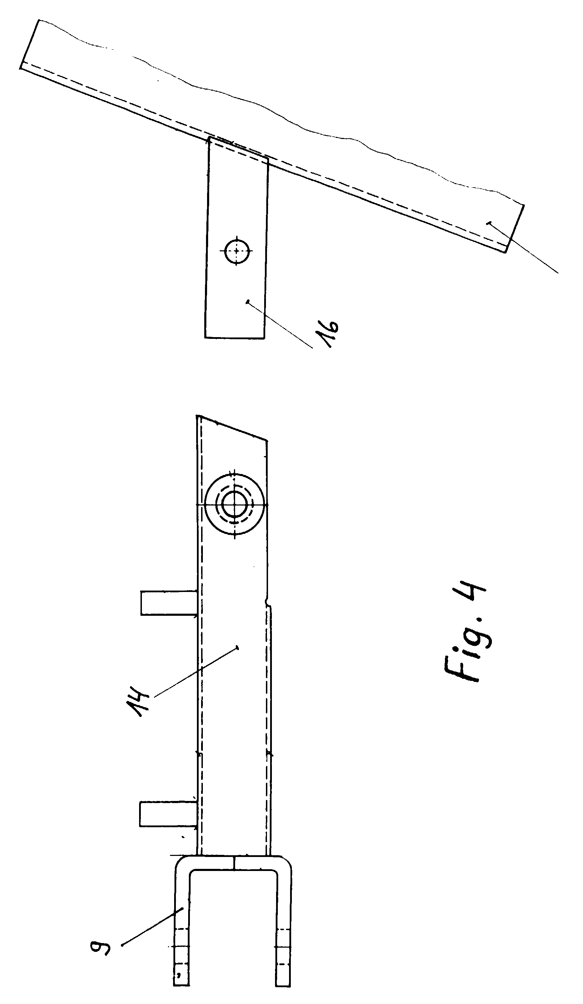

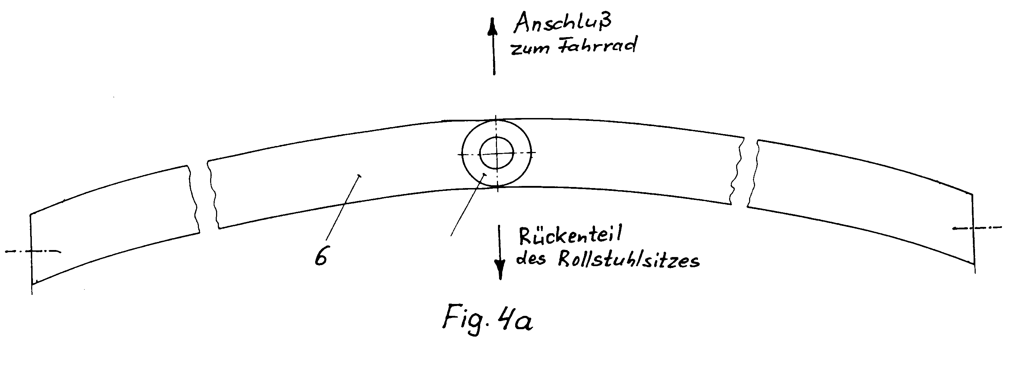

Weiterhin ist in Schulterhöhe des Behinderten quer an der Rückwand des Rollstuhls jeweils an dessen Seitenbegrenzungsteilen, zweckmäßigerweise an den Rahmenrohren, eine obere Strebe 6 lösbar befestigt. An dieser oberen Strebe 6 ist eine obere Kupplung angebracht, mit der über ein drehbares Gelenk 7 und mit einer klauenartigen Ausformung des Halterungsendes ein schnell lösbarer Verschluß 8 mit dem Fahrrad im Bereich des Steuer- / Lenkkopfes hergestellt werden kann, wie in Fig.2 gezeigt.
In einer weiteren Variante der oberen Kupplung wird mittig an der oberen Strebe 6 eine Klaue 9 um eine nahezu senkrechte Achse schwenkbar gelagert, an der ein Kupplungsstück 10 um eine waagerechte und quer zur Fahrtrichtung liegende Achse schwenkbar gehaltert ist und an dessen dem Schwenklager entgegengesetzten Ende Verschlußnocken 11 angebracht sind.
Zur Verbindung der oberen Kupplung mit dem Fahrrad ist an dessen Steuerkopfrohr mittels einer durch Schnellspannschrauben oder durch normale Schrauben verschraubten oder verschweißten Schelle ein nahezu waagerecht liegendes Kupplungsvorderteil 12 angeordnet, das mit Aussparungen 13 versehen ist, in die die Verschlußnocken 11 im gekuppelten Zustand eingerastet und durch einen üblichen Verschließmechanismus vor dem selbsttätigen Ausrasten der Kupplung gesichert sind.
In einer bevorzugten Variante der oberen Kupplung ist an der um die nahezu senkrecht gelagerte Achse verschwenkbare Klaue 9 ein Rohrstück 14 angeschweißt, in das zum Zusammenschluß von Rollstuhl bzw. Lastenträger und Fahrrad ein mit einer Halterung am Steuerrohr des Fahrrads verschweißtes Gegenrohr bzw. Gegenstück 16 eingeführt und mittels eines quer durch Rohrstück 14 und Gegenstück 16 hindurchgehenden Verschluß- und Sicherungsbolzen arretiert.
Um die bevorzugte Lage der gemeinsamen Schwenkachse von oberer und unterer Kupplung mit 89° gegen die Horizontale einzuhalten, wird die beidseits am Rollstuhlrahmen befestigte Strebe 6 gegebenenfalls mit einer leichten Krümmung versehen, wie in Fig. 4a gezeigt. In der Mitte der Strebe 6 ist das Schwenklager für die Klaue 9 eingeschweißt.
Für den Anschluß des Lastenträgers gemäß Fig. 1 ist diese Krümmung der Strebe 6 konstruktiv nicht erforderlich.

Da der Rollstuhl bei Nutzung als Mehrzweckfahrzeug im leicht angekippten Zustand mit dem Fahrrad verbunden ist, so daß die beiden vorderen Stützräder oberhalb der Fahrbahn bewegt werden, empfiehlt es sich, in die obere Kupplung ein Spannschraubenelement einzufügen, um ggf. in Abhängigkeit der Unebenheiten des Fahrwegs oder der Schwerpunktlage des Behinderten, der horizontalen Abweichung von der Hauptachse, die günstigste Lenk- und Fahrbarkeit des Mehrzweckfahrzeugs einstellen zu können.

Für die Montage des Mehrzweckfahrzeugs aus Rollstuhl bzw. Lastenträger und handeslüblichem Fahrrad wird aus der Vorderradgabel das Vorderrad entfernt und in eine seitlich neben dem Hinterrad und dem Gepäckträger am Rahmen angeordneten Halterung gesteckt. Dann brauchen nur noch die Ausfallenden der Vorderradgabel in die untere Kupplung eingehängt und verriegelt zu werden sowie die Verbindung des Rohrstücks 14 mit dem Gegenstück 16 zwischen Rollstuhl bzw. Lastenträger, jeweils im Schiebestangenbereich, und dem Fahrrad, im Steuer- / Lenkkopfbereich, mittels oberer Kupplung hergestellt zu werden.
Bei der Demontage verlaufen die Handgriffe in umgekehrter Reihenfolge.
Nach dem Einbau des vorderen Rades in die Vorderradgabel des Fahrrades ist eine getrennte Nutzung der jeweiligen Komponenten des Mehrzweckfahrzeuges möglich.
Auch einem PKW-Transport des Mehrzweckfahrzeugs mit mehreren oder nur einer Komponente steht die erfindungsgemäße Lösung nicht im Wege.

## Patentansprüche

1. Dreirädriges Mehrzweckfahrzeug zur wahlweisen Beförderung von insbesondere gehbehinderten Personen oder von Lasten, bestehend aus einem zweirädrigen Vorderteil und aus einem einrädrigen, mit einem Fahrradantriebsmechanismus versehenen Hinterteil sowie einem Verbindungsmechanismus zwischen Vorder- und Hinterteil, ***dadurch gekennzeichnet,*** daß ein handelsübliches Fahrrad über einen Anschlußmechanismus entweder für den Transport von insbesondere gehbehinderten Personen mit einem selbständig fahrstabilen Rollstuhl oder für den Transport von Lasten mit einem selbständig handhabbaren, zweirädrigen einachsigen Lastenträger verbunden ist und, daß dazu aus der Vorderradgabel des Fahrrads das Vorderrad entfernt und in einer seitlich neben dem Hinterrad und dem Gepäckträger am Rahmen angeordneten Halterung gelagert ist und, daß der Anschlußmechanismus aus zwei senkrecht übereinander angeordneten lösbaren Verbindungselementen besteht und, daß in dem unteren Verbindungselement, der unteren Kupplung, das Fahrrad mit den Ausfallenden der Vorderradgabel an einem kardanisch gelagerten Tragbolzen abgestützt ist und, daß das obere Verbindungselement, die obere Kupplung, mit einem Gelenk für um eine nahezu senkrechte Achse ausführbare Schwenkbewegungen ausgerüstet ist.

2. Dreirädriges Mehrzweckfahrzeug nach Anspruch 1, ***dadurch gekennzeichnet,*** daß die Schwenkachse, die Verbindungslinie zwischen dem Gelenk des oberen Verbindungselementes und dem Gelenk des unteren Verbindungselementes, in einem Winkel von 88° bis 89°, vorzugsweise 89°, zur Horizontalen ausgeführt ist.

3. Dreirädriges Mehrzweckfahrzeug nach Anspruch 1, ***dadurch gekennzeichnet,*** daß die Ausfallenden der Vorderradgabel mittels Flügelschrauben oder Schnellspannern oder verstellbaren Klemmhebeln oder Achsmuttern an dem kardanisch gelagerten Tragbolzen befestigt sind.

4. Dreirädriges Mehrzweckfahrzeug nach Anspruch 1, ***dadurch gekennzeichnet,*** daß der kardanisch gelagerte Tragbolzen als Schnellspannachse ausgeführt ist.

5. Dreirädriges Mehrzweckfahrzeug nach Anspruch 1 und 2, ***dadurch gekennzeichnet,*** daß das Steuerrohr des Fahrrads mit einer nach vorne gerichteten "Ausschweifung" versehen, vorzugsweise verschweißt, ist, an deren vorderstem Ende das Schwenklager des oberen Verbindungselementes angeordnet ist.

6. Dreirädriges Mehrzweckfahrzeug nach Anspruch 1,2 und 5, ***dadurch gekennzeichnet,*** daß die obere Kupplung aus zwei mittels eines Schnellspannverschlusses zusammenfügbaren Kupplungsteilen besteht, einem am Rollstuhl oder dem Lastenträger gehalterten schwenkbaren Kupplungsstück und einem am Steuer- oder Lenkkopf des Fahrrads befestigten Klauenkupplungsteil.
